# EUROPÄISCHE PATENTANMELDUNG

(11) **EP 2 120 427 A1**
(43) Veröffentlichungstag der Anmeldung: **18.11.2009**
(21) Anmeldenummer: 09004513.9
(22) Anmeldetag: 28.03.2009
(51) Int. Cl.: H04M 1/02, G06F 1/16

(54) **Elektronisches Gerät in Form einer Telefon-Freisprecheinrichtung und/oder eines Navigationsgeräts**

(30) Priorität: 22.04.2008 DE 102008020551
(71) Anmelder: Bury Sp.z.o.o, 39 300 Mielec (PL)
(72) Erfinder: Bury, Henryk, 32584 Löhne (DE); Rozak, Feliks, 35323 Pzeszow (PL)
(74) Vertreter: Lins, Edgar

(57) **Zusammenfassung**

Eine elektronisches Gerät in Form einer Telefon-Freisprecheinrichtung und/oder eines Navigationsgeräts, mit einem Gehäuse mit einem Basisteil (1) an dem ein Displayteil (3) schwenkbar so befestigt ist, dass es im zusammengeklappten Zustand auf dem Basisteil (1) aufliegt, sodass Basisteil (1) und Displayteil (3) jeweils eine Außenseite (4, 5) bilden und auf der Außenseite (5) des Displayteils (3) ein Display (7) angeordnet ist erlaubt eine vielfältigere Verwendungsmöglichkeit dadurch, dass das Displayteil (3) um etwa 180° von dem Basisteil (1) weg schwenkbar gelagert ist und dass auf der Außenseite (4) des Basisteils (1) eine vollständige alphanumerische Tastatur (6) angebracht ist. Insbesondere ist das so ausgebildete elektronische Gerät vorzugsweise zur drahtlosen Verbindung mit einem Datennetz (Internet) eingerichtet.

## Beschreibung

Die Erfindung betrifft ein elektronisches Gerät in Form einer Telefon-Freisprecheinrichtung und/ oder eines Navigationsgeräts, mit einem Gehäuse mit einem Basisteil, das zur Befestigung mit einer Befestigungseinrichtung in einem Kraftfahrzeug ausgebildet und an den ein Displayteil schwenkbar so befestigt ist, dass es im zusammengeklappten Zustand auf dem Basisteil aufliegt, sodass Basisteil und Displayteil jeweils eine Außenseite bilden und auf der Außenseite des Displayteils ein Display angeordnet ist.

Ein derartiges Gerät ist unter der Bezeichnung "BURY CV 9040" im Markt. Dabei ist das Basisteil zur Befestigung des Geräts ausgebildet, und zwar vorzugsweise mit einem Befestigungsrahmen, der in einem Kraftfahrzeug auf dem Armaturenbrett, an der Sonnenblende, am Rückspiegel an der Windschutzscheibe o. ä. befestigbar ist. Das Displayteil ist an dem Basisteil um maximal 90° schwenkbar angebracht. Bei einer Befestigung auf einer im Wesentlichen unter der Kopfhöhe befindlichen Unterlage, wie auf der Oberseite eines Armaturenbretts, erstreckt sich das Displayteil mit seinem Display von dem Basisteil nach oben, während es sich bei einer Anbringung an der Sonnenblende, an der Windschutzscheibe, am Rückspiegel o. ä. vorzugsweise nach unten erstreckt. Das Gerät ist mit einem entsprechenden Positionssensor ausgebildet, der die Ausrichtung des Displayteils erkennt und automatisch die Anzeige anpasst, sodass die genannten Montagemöglichkeiten unproblematisch bestehen. Das bekannte Gerät ist als Freisprecheinrichtung konzipiert, das mit einem Mobiltelefon über eine drahtlose Nahübertragungseinrichtung nach dem Bluetooth-Standard kommuniziert und es daher ermöglicht, das Telefonat über einen Lautsprecher und ein Mikrofon zu führen, die in dem Gerät eingebaut sind. Die Bedienung des Gerätes kann über eine Sprachsteuerung oder über das als Touch Screen ausgebildete Display auf der Außenseite des Displayteils erfolgen. Das Gerät ist durch einen Akkumulator mit einer autarken Stromversorgung versehen.

Der vorliegenden Erfindung liegt die Aufgabe zugrunde, ein derartiges Gerät noch vielseitiger einsetzbar zu gestalten.

Diese Aufgabe wird erfindungsgemäß mit einem elektronischen Gerät der eingangs erwähnten Art dadurch gelöst, dass das Displayteil um etwa 180° von dem Basisteil weg schwenkbar gelagert ist und dass auf der Außenseite des Basisteils eine vollständige alphanumerische Tastatur angebracht ist.

Während das bekannte elektronische Gerät aufgrund seiner klappbaren Ausgestaltung und seines Positionssensors unterschiedliche Befestigungsarten bei immer gegebener optimaler Erkennbarkeit des Displays auf der Außenseite des Displayteils ermöglichte, kann das erfindungsgemäße Gerät nunmehr auch in einer ganz anderen Weise benutzt werden, indem das Displayteil um etwa 180° von dem Basisteil weg geklappt wird, wodurch aufgrund der Anordnung der Tastatur auf der Außenseite des Basisteils die Tastatur nunmehr unterhalb des Displays auf der Außenseite des Displayteils positioniert ist und das Gerät mit vollständiger Tastatur unterhalb des Displays bedienbar ist. Somit kann das elektronische Gerät in einfacher Weise nach Art eines Laptops beispielsweise für die Eintragung von Termindaten usw. benutzt werden, wenn es aus seiner Befestigungsposition, beispielsweise in einem Kraftfahrzeug, herausgenommen und auf einer normalen Unterlage, beispielsweise einem Schreibtisch, benutzt wird.

Die erfindungsgemäße Anordnung sieht vor, dass in ungewöhnlicher Weise das Gerät auf der Außenseite des Basisteils eine Tastatur trägt, sodass die Tastatur im zusammengeklappten Zustand des Geräts auf der Außenseite liegt. Bei einem Laptop oder einem ähnlichen Gerät, wie beispielsweise dem Gerät "Communicator" des Telefonherstellers Nokia, befindet sich die Tastatur bei einem klappbaren Gerät immer auf der Innenseite des Basisteils und wird daher beim Zusammenklappen des Geräts verdeckt.

Die erfindungsgemäße Ausführungsform erlaubt demgegenüber die Verwendung des elektronischen Geräts nach Art eines Laptops einerseits und die Nutzung als Displaygerät für eine Freisprecheinrichtung oder ein Navigationsgerät durch eine für ein Kraftfahrzeug geeignete Befestigung des Basisteils andererseits.

Die alphanumerische Tastatur ist vorzugsweise als Computer-Tastatur, insbesondere Kompakttastatur, ausgebildet.

Besonders vorteilhaft ist die erfindungsgemäße Ausbildung des elektronischen Geräts, wenn dieses zur drahtlosen Verbindung mit einem Datennetz, beispielsweise Internet, eingerichtet ist. Das Navigieren in und Arbeiten mit dem Datennetz ist durch die vollständig vorhandene Tastatur besonders bequem und unterliegt nicht den Restriktionen, die sich beispielsweise bei einem internetfähigen Mobiltelefon aufgrund des aus Platzgründen erzwungenen Fehlens der Tastatur ergeben. Soweit ein Mobiltelefon mit einer Tastatur ausgestattet worden ist (Nokia Communicator), hat die dadurch erzwungene Größe des Mobiltelefons zu erheblichen Akzeptanzproblemen geführt.

Vorzugsweise ist auch das erfindungsgemäße elektronische Gerät mit einer drahtlosen Nahübertragungseinrichtung für Daten und/oder Audiosignale, insbesondere nach dem Bluetooth-Standard, ausgestattet.

In einer bevorzugten Ausführungsform des erfindungsgemäßen Geräts ist das Displayteil relativ zum Basisteil bis zu einem Anschlag um etwa 180° aufklappbar. Durch den Anschlag ergibt sich in Aufklapprichtung eine stabile Verbindung zwischen Displayteil und Basisteil. Wenn dann in einer bevorzugten Ausführungsform das Displayteil mit einer am Displayteil schwenkbar angebrachten und vom Display weg schwenkbaren Stütze zur Abstützung auf einer Auflagefläche versehen ist, kann das Gerät in dem bis zum Anschlag aufgeklappten Zustand als stabile Anordnung auf die Auflagefläche gelegt werden und durch die ausgeschwenkte Stütze schräg positioniert sein, wodurch die Erkennbarkeit des Displays und die Handhabbarkeit erheblich verbessert sind.

Die Erfindung soll im Folgenden anhand von in der Zeichnung dargestellten Ausführungsbeispielen näher erläutert werden. Es zeigen:
- Figur 1: eine perspektivische Ansicht einer Ausführungsform des erfindungsgemäßen Geräts in aufgeklappter Stellung;
- Figur 2: eine mögliche Montageposition für das erfindungsgemäße Gerät;
- Figur 3: eine mögliche andere Montageposition für das erfindungsgemäße Gerät;
- Figur 4: das Gerät gemäß Figur 1 im zum Transport zusammengeklappten Zustand;
- Figur 5: eine Frontansicht auf das Gerät gemäß Figur 1 mit Display und Tastatur;
- Figur 6: eine Darstellung des Geräts gemäß Figur 2 mit einer Displaydarstellung für eine Touch Screen-Bedienung;
- Figur 7: eine Darstellung gemäß Figur 6 für das Gerät in der Position gemäß Figur 3;
- Figur 8: eine Draufsicht auf das Display in einer Hochkantposition des Geräts.

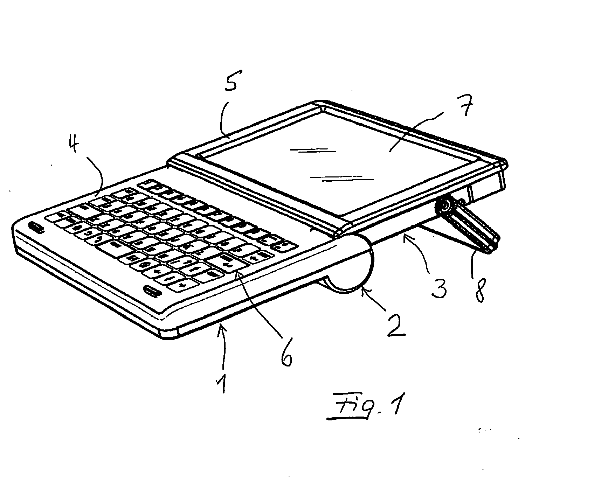

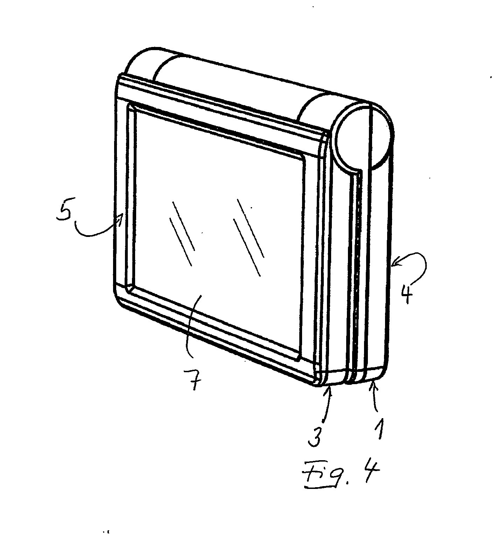

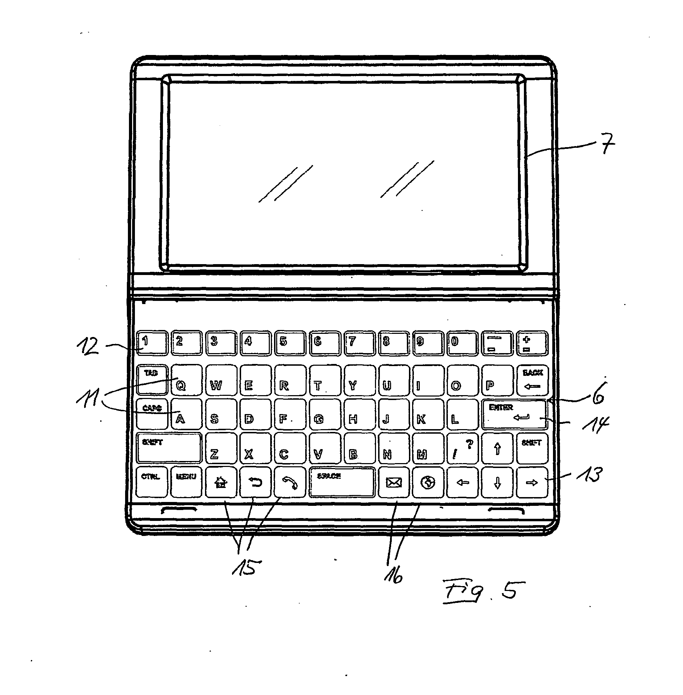

Figur 1 verdeutlicht, dass das erfindungsgemäße Gerät ein Basisteil 1 aufweist, an das über ein Scharnier 2 ein Displayteil 3 schwenkbar angelenkt ist. Das Gerät befindet sich in einer vollständig aufgeklappten Stellung, in der das Displayteil 3 das Basisteil 1 fluchtend fortsetzt, also um 180° aufgeklappt ist. Das Gerät lässt sich aus der in Figur 1 dargestellten aufgeklappten Stellung in die in Figur 4 dargestellte zusammengeklappte Stellung verbringen, indem das Displayteil 3 in der Darstellung gemäß Figur 1 im Uhrzeigersinn (also nach unten) gegen das Basisteil 1 geklappt wird. Demgemäß sind in Figur 1 Außenseiten 4, 5 des Basisteils 1 und des Displayteils 3 bezüglich der in Figur 4 gezeigten zusammengeklappten Stellung erkennbar. Das Basisteil 1 weist auf seiner Außenseite 4 eine Tastatur 6 auf, die - wie anhand der Figur 5 noch erläutert werden wird - eine vollständige Computer-Tastatur in Form einer für Laptops üblichen Kompakttastatur ausgebildet ist. Auf der Außenseite 5 des Displayteils 3 befindet sich ein großflächiges Display 7.

Zur Abstützung auf einer (nicht dargestellten) Unterlage ist aus der Ebene des Displayteils 3 ein das Displayteil 3 überspannender U-förmiger Bügel als Stütze 8 herausschwenkbar, wie dies in Figur 1 gezeigt ist. Das Gerät ist somit auf eine Unterlage kippfrei legbar, wobei die Außenseiten 4, 5 von Basisteil 1 und Displayteil 3 miteinander etwa fluchtend schräg aufsteigend verlaufen, wodurch eine günstige Handhabbarkeit der Tastatur 6 und Ablesbarkeit des Displays 7 gegeben ist.

Figur 1 verdeutlicht eine Benutzungsweise des erfindungsgemäßen Geräts, die nicht der typischen Benutzung entspricht, da das Gerät üblicherweise in einem Kraftfahrzeug montiert ist, während Figur 1 die Brauchbarkeit des Geräts verdeutlicht, nachdem es aus seiner Befestigungsposition im Kraftfahrzeug herausgenommen worden ist.

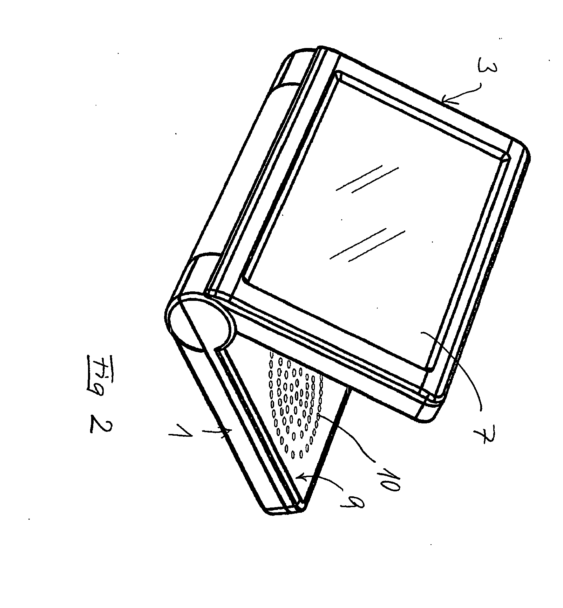

Figur 2 zeigt eine mögliche Anordnung des Geräts, wobei das Basisteil 1 zur Befestigung mit einer (nicht dargestellten) Befestigungseinrichtung, beispielsweise in Form eines Aufnahmerahmens, ausgebildet ist. Der Aufnahmerahmen kann sich dabei auf einer schräg nach oben ansteigenden Fläche des Armaturenbretts eines Kraftfahrzeugs befinden, woraus sich eine Nutzstellung des Displayteils 3 ergibt wie sie in Figur 2 dargestellt ist. Das Displayteil 3 erstreckt sich von dem Basisteil 1 nach oben, und zwar so, dass es einen guten Draufblick des Fahrers des Fahrzeugs auf das Display 7 ermöglicht.

Figur 2 verdeutlicht, dass sich auf einer Innenseite 9 des Basisteils 1 eine zahlreiche Löcher aufweisende Lautsprecherabdeckung 10 befindet, die die Schallabstrahlung von einem in dem Basisteil 1 angebrachten Lautsprecher erleichtert.

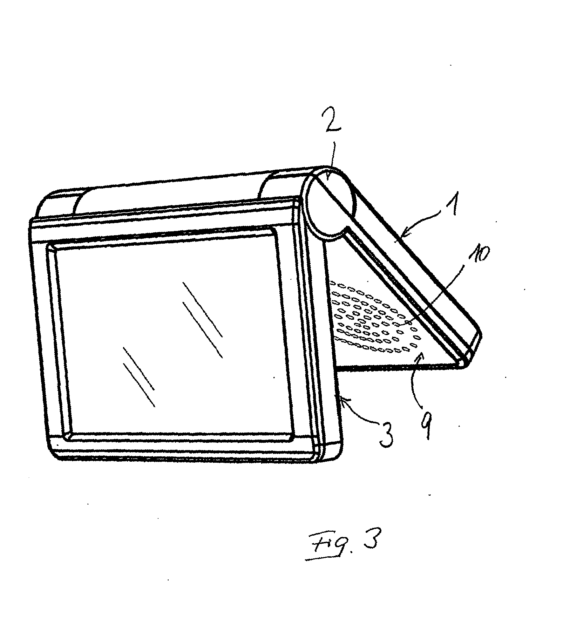

Figur 3 zeigt demgegenüber eine Anordnung des erfindungsgemäßen Geräts, bei dem sich das Basisteil 1 in einer Stellung befindet, wie sie sich aus der Befestigung des Basisteils 1 an einer Sonnenblende oder an der schräg gestellten Frontscheibe eines Kraftfahrzeugs ergibt. Demgemäß erstreckt sich dabei das von dem Basisteil um einen spitzen Winkel abgeklappte Displayteil 3 von dem Scharnier 2 nach unten, also in einer gegenüber der Figur 2 umgedrehten Stellung des Geräts.

Figur 4 zeigt das Gerät im zusammengeklappten Zustand, nachdem es aus dem Kraftfahrzeug entnommen worden ist, um handlich transportiert werden zu können.

Da sich die Tastatur 6 auf der Außenseite 4 des Basisteils 1 befindet, liegt im zusammengeklappten Zustand des Geräts die Tastatur 6 außen.

Figur 5 verdeutlicht, dass das Gerät in dem aufgeklappten Zustand gemäß Figur 1 vollständig nach Art eines Laptops bedienbar ist, da die Tastatur zweckmäßigerweise als Laptop-Kompakttastatur ausgebildet ist. Neben Tasten 11 für die einzelnen Buchstaben befinden sich Tasten 12 für Zahlen in einer obersten Reihe angeordnet. Navigationstasten 13 (oben, unten, links, rechts) erlauben die Verschiebung des Cursors und befinden sich unterhalb einer größer ausgebildeten "Enter"-Taste 14. Ergänzt wird die Tatstatur durch übliche Funktionstasten 15, wie sie sich auf einer Laptop-Tastatur befinden, wobei bei dem erfindungsgemäßen Gerät vorzugsweise auch Tasten 16 vorgesehen sind, die sich auf den Zugang zum Internet beziehen, da das erfindungsgemäße Gerät vorzugsweise für einen Zugang zu einem Datennetz, insbesondere Internet, vorgesehen ist.

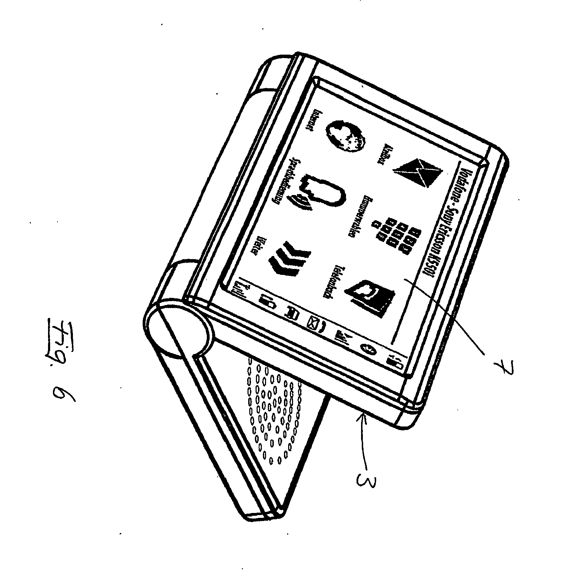

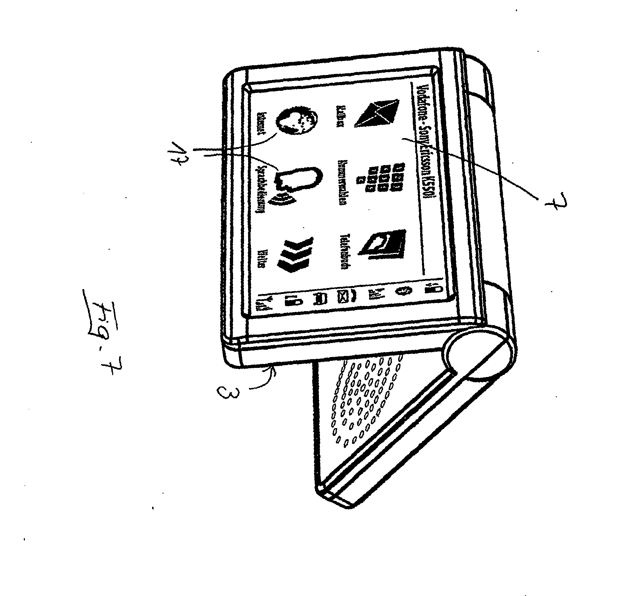

Die Figuren 6 und 7 entsprechen den Darstellungen der Figuren 2 und 3, zeigen jedoch auf dem Display 7 jeweils Funktionsfelder 17, da das Display 7 vorzugsweise als Touch Screen ausgebildet ist und somit die Auswahl der Funktionen über eine Berührung des Displays 7 ermöglichen.

Die Figuren 6 und 7 zeigen, dass die Darstellung der Funktionsfelder 17 auf dem Display 7 an die jeweilige Position des Displayteils 3 angepasst ist, indem das Displayteil 3 mit einem (nicht dargestellten) Positionssensor versehen ist, der die Ausrichtung des Displayteils 3 relativ zur Erdanziehung erkennt und darauf die Wiedergabe der Funktionsfelder 17 automatisch einstellt.

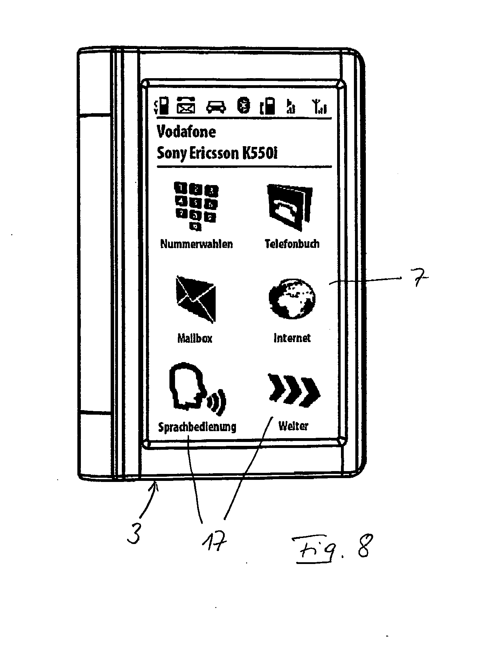

Figur 8 verdeutlicht, dass auch eine Wiedergabe der Funktionsfelder 17 auf dem Display 7 in einem Hochformat möglich ist, wenn das Displayteil 8 nach Art eines Notizbuches im Hochformat gehalten wird.

Die erfindungsgemäße Ausbildung der Tastatur 6 auf der Außenseite 4 des Basisteils 1 ermöglicht somit eine vielseitige Verwendung des erfindungsgemäßen Geräts sowohl im eingebauten Zustand in unterschiedlichen Einbaulagen als auch nach einer Herausnahme aus einer Einbauhalterung als transportables Gerät, das dabei die Benutzung nach Art eines Laptops erlaubt.

Das Basisteil 1 enthält dabei zweckmäßigerweise neben einem Lautsprecher auch eine Batterie, die eine wiederaufladbare Batterie sein kann. Da das Displayteil 3 im eingebauten Zustand dem Benutzer zugewandt ist, ist ein zu einer Freisprecheinrichtung gehörendes Mikrofon vorzugsweise im Displayteil 3 untergebracht. Die elektrische Verbindung zwischen Displayteil 3 und Basisteil 1 erfolgt über eine entsprechende Kontaktierung im Scharnier 2.

Es ist natürlich möglich, die Aufladung des Akkumulators mit Hilfe eines Ladekabels zu bewirken, das beispielsweise in einen Zigarettenanzünderanschluss des Kraftfahrzeugs kontaktierbar ist. Es ist aber auch möglich, für die Aufladung des Akkumulators das Gerät mit Solarzellen auszustatten.

Statt der Bedienung des Geräts über die Funktionsfelder 17 des als Touch Screen ausgebildeten Displays 7 kann auch ein normales Display 7 verwendet werden, wenn das Displayteil 3 mit entsprechenden Bedientasten versehen wird. Li/ms

## Patentansprüche

1. Elektronisches Gerät in Form einer Telefon-Freisprecheinrichtung und/oder eines Navigationsgeräts, mit einem Gehäuse mit einem Basisteil (1), das zur Befestigung mit einer Befestigungseinrichtung in einem Kraftfahrzeug ausgebildet und an den ein Displayteil (3) schwenkbar so befestigt ist, dass es im zusammengeklappten Zustand auf dem Basisteil (1) aufliegt, sodass Basisteil (1) und Displayteil (3) jeweils eine Außenseite (4, 5) bilden und auf der Außenseite (5) des Displayteils (3) ein Display (7) angeordnet ist, **dadurch gekennzeichnet, dass** das Displayteil (3) um etwa 180° von dem Basisteil (1) weg schwenkbar gelagert ist und dass auf der Außenseite (4) des Basisteils (1) eine vollständige alphanumerische Tastatur (6) angebracht ist.

2. Elektronisches Gerät nach Anspruch 1, **dadurch gekennzeichnet, dass** die alphanumerische Tastatur (6) als eine Computer-Tastatur ausgebildet ist.

3. Elektronisches Gerät nach Anspruch 2, **dadurch gekennzeichnet, dass** die alphanumerische Tastatur (6) eine Kompakttastatur ist.

4. Elektronisches Gerät nach einem der Ansprüche 1 bis 3, **dadurch gekennzeichnet, dass** es zur drahtlosen Verbindung mit einem Datennetz eingerichtet ist.

5. Elektronisches Gerät nach einem der Ansprüche 1 bis 4, **dadurch gekennzeichnet, dass** es mit einer drahtlosen Nahübertragungseinrichtung für Daten und/oder Audiosignale ausgestattet ist.

6. Elektronisches Gerät nach einem der Ansprüche 1 bis 5, **dadurch gekennzeichnet, dass** das Display teil (3) relativ zum Basisteil (1) bis zu einem Anschlag um etwa 180° aufklappbar ist.

7. Elektronisches Gerät nach einem der Ansprüche 1 bis 6, **dadurch gekennzeichnet, dass** das Displayteil (3) mit einer am Display teil (3) schwenkbar angebrachten und vom Display (7) weg schwenkbaren Stütze (8) zur Abstützung auf einer Auflagefläche versehen ist.
